# FASCICULE DE BREVET EUROPEEN

(11) **EP 0 896 558 B1**
(45) Date de publication et mention de la délivrance du brevet: **04.07.2001**
(21) Numéro de dépôt: 97918244.1
(22) Date de dépôt: 16.04.1997
(51) Int. Cl.: B60K 17/24

(54) **ARBRE-RELAIS POUR TRANSMISSION DE VEHICULE AUTOMOBILE, DISPOSITIF DE TRANSMISSION CORRESPONDANT, ET TRANSMISSION POUR VEHICULE AUTOMOBILE**
HAUPTANTRIEBSWELLE FÜR KRAFTFAHRZEUG, ENTSPRECHENDE ANTRIEBSVORRICHTUNG UND KRAFTFAHRZEUGANTRIEB
MOTOR VEHICLE TRANSMISSION MAIN SHAFT, CORRESPONDING TRANSMISSION DEVICE AND MOTAR VEHICLE TRANSMISSION

(30) Priorité: 23.04.1996 FR 9605108
(43) Date de publication de la demande: 17.02.1999
(73) Titulaire: GKN Automotive GmbH, 53797 Lohmar (DE)
(72) Inventeur: POULIN, Bernard +di, (FR); DECLAS, Frédéric, F-75017 Paris (FR); MARGERIE, Michel, F-95510 Vétheuil (FR)
(74) Mandataire: Jacobson, Claude
(86) Numéro de dépôt international: FR9700687
(87) Numéro de publication internationale: WO9739909

(56) Documents cités:
- FR-A- 2 619 879
- US-A- 4 421 187

## Description

La présente invention est relative à un arbre-relais pour transmission de véhicule automobile.
Elle s'applique en particulier aux véhicules automobiles à traction avant.

Dans les véhicules automobiles à traction avant, l'ensemble boîte de vitesses-différentiel est généralement décalé par rapport au plan longitudinal de symétrie du véhicule

Pour rendre plus rationnelle la fabrication des transmissions, il a été proposé d'utiliser d'une part deux parties de transmission identiques, disposées symétriquement, et d'autre part un arbre-relais reliant la sortie correspondante dudit différentiel à la partie de transmission la plus éloignée. L'arbre-relais est supporté par un palier lui-même porté par le groupe moto-propulseur, voire par la structure du véhicule (voir par exemple le US-A-4 421 187).

L'invention a pour but de fournir un arbre-relais de faible poids qui soit économique à réaliser et possède une raideur élevée.

A cet effet, l'invention a pour objet un arbre-relais pour transmission de véhicule automobile, suivant la revendication 1.

L'arbre-relais suivant l'invention peut comporter une ou plusieurs des caractéristiques des revendications 2 à 7.

Le FR-A-2 619 879, Fig. 3 et 4, montre d'autres agencements d'arbres combinés à un palier intermédiaire.

L'invention a également pour objet un dispositif de transmission pour véhicule automobile comprenant un arbre-relais tel que défini ci-dessus, suivant la revendication 8.

Deux modes de réalisation de ce dispositif de transmission sont décrits respectivement dans les revendications 9 et 10.

L'invention a encore pour objet une transmission pour véhicule automobile, suivant la revendication 11. Des caractéristiques avantageuses de cette transmission sont décrites dans les revendications 12 et 13.

Des exemples de réalisation de l'invention vont maintenant être décrits en regard des dessins annexés, sur lesquels :
- la Figure 1 représente schématiquement, vu de l'avant et en coupe transversale, un véhicule automobile équipé d'une transmission conforme à l'invention;
- la Figure 2 est une vue en coupe longitudinale d'un premier mode de réalisation de l'arbre-relais de la transmission de la Figure 1;
- la Figure 3 est une vue en bout de l'arbre-relais;
- la Figure 4 est une vue analogue à la Figure 2 d'une première variante;
- la Figure 5 est une vue analogue à la Figure 2 d'une deuxième variante;
- la Figure 6 est une vue en coupe longitudinale d'une pièce qui fait partie d'un autre mode de réalisation de l'arbre-relais suivant l'invention;
- la Figure 7 est une vue analogue montrant la pièce de la Figure 6 montée dans un organe de support;
- les Figures 8 et 9 sont des vues correspondant respectivement aux Figures 6 et 7 mais relatives à une variante; et
- la Figure 10 représente en coupe longitudinale un ensemble de sortie de différentiel de la transmission.

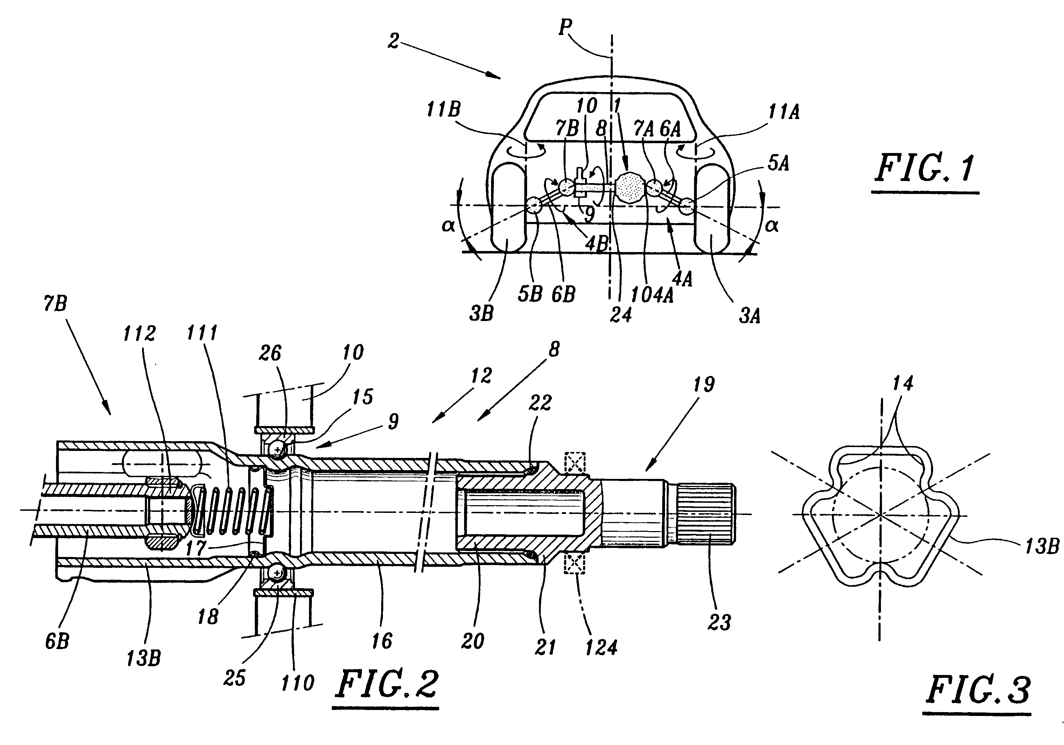

On voit sur la Figure 1 le bloc boîte de vitesses-différentiel 1 d'un véhicule automobile 2 à traction avant. Ce bloc est déporté latéralement, vers la droite sur le dessin, par rapport au plan de symétrie longitudinal P du véhicule.

Le bloc 1 est relié aux deux roues avant par une transmission qui comprend :
- pour la roue gauche 3A, la plus proche du bloc 1, d'une part une partie de transmission 4A, et d'autre part d'un ensemble de liaison 104A représenté à la Figure 10 et décrit plus loin. La partie de transmission 4A est constituée d'un joint homocinétique fixe 5A adjacent à la roue, d'un arbre de liaison 6A et, à l'extrémité intérieure de cet arbre, de l'élément mâle d'un joint homocinétique coulissant 7A;
- pour la roue droite 3B, la plus éloignée du bloc 1 : d'une part une partie de transmission 4B identique à la partie de transmission 4A, c'est-à-dire constituée d'un joint homocinétique fixe 5B adjacent à la roue, d'un arbre de liaison 6B et de l'élément mâle d'un joint homocinétique coulissant 7B; et d'autre part un arbre-relais 8 qui relie la sortie correspondante du différentiel à l'élément mâle en question.

Dans cet exemple, les joints 7A et 7B sont des joints coulissants du type à tripode, tandis que les joints 5A et 5B sont des joints fixes qui peuvent être également des joints à tripode, ou bien des joints à billes.

Les parties de transmission 4A et 4B sont symétriques par rapport au plan P. Les arbres 6A et 6B sont inclinés d'un même angle α par rapport à leurs fusées de roue.

Au voisinage du joint 7B, l'arbre-relais 8 est supporté par un palier 9 à roulement à billes, lequel est lui-même porté par une cloison de support 10 fixée au groupe moto-propulseur.

On a schématisé par des flèches, sur la Figure 1, la rotation des trois arbres 6A, 6B et 8, ainsi que le pivotement des roues autour de leurs axes de pivotement respectifs 11A, 11B.

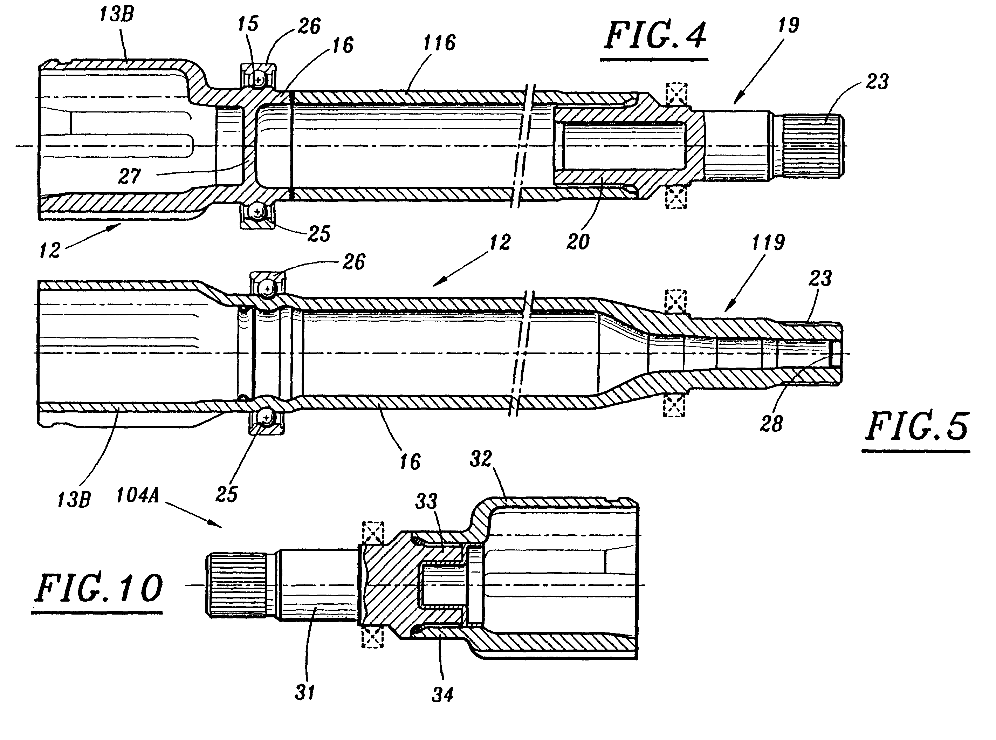

Les Figures 2 et 3 représentent un premier mode de réalisation de l'arbre-relais 8, lequel comprend deux pièces principales.

La première pièce 12 est une pièce tubulaire qui forme, de gauche à droite, la tulipe 13B du joint coulissant 7B, avec ses six chemins de roulement 14 (Figure 3), destinée à recevoir l'élément mâle du joint, puis, dans une région déformée radialement vers l'intérieur, la piste intérieure 15 du roulement à billes du palier 9, puis une partie tubulaire 16 de section circulaire constante. Cette partie 16 est toutefois munie, à son extrémité libre, de cannelures intérieures. Le fond de la tulipe 13B est obturé hermétiquement par une coupelle 17 en tôle munie d'un joint annulaire d'étanchéité périphérique 18.

La seconde pièce 19 de l'arbre-relais 8 est un embout de liaison dont une partie d'extrémité 20, extérieurement cannelée, est emboîtée dans la partie d'extrémité cannelée de la pièce 12, l'embout comportant une collerette extérieure 21 qui bute contre la tranche d'extrémité de la pièce 12. Un joint d'étanchéité annulaire 22 est disposé dans un chanfrein intérieur de la pièce 12 et comprimé par la collerette 21. L'extrémité opposée 23 de l'embout 19 est cannelée et s'emboîte dans un orifice de sortie 24 (Figure 1) du différentiel, lequel orifice est muni d'un joint d'étanchéité 124 représenté en pointillés sur la Figure 2.

On a également représenté sur la Figure 2 les billes 25 du palier 9 et la bague extérieure 26 de ce dernier, cette bague étant montée librement coulissante dans une ouverture circulaire 110 de la cloison de support 10 de la Figure 1.

Lorsque la transmission est montée, l'embout 19 est en butée axiale dans le différentiel, et la pièce 12 est sollicitée élastiquement en butée sur la collerette 21 de l'embout par un ressort hélicoïdal 111 qui est comprimé entre la coupelle 17 et l'extrémité 112 de l'arbre 6B du tripode du joint 7B.

L'arbre-relais ainsi décrit est rigide, léger et économique à réaliser. En particulier, la pièce 12 peut être obtenue par déformation à froid d'un tube-ébauche, puis rectification en une seule passe du chemin de roulement 15.

La variante de la Figure 4 ne diffère de la précédente que par les points suivants :
- la partie tubulaire 16 de la pièce 12 est de courte longueur, et est prolongée par un tube 116 de même section qui lui est relié par soudage bout à bout;
- le chemin intérieur de roulement 15 est réalisé par usinage extérieur de la pièce 12 au droit d'une cloison transversale 27 venue de matière avec cette pièce. Cette cloison réalisant l'obturation étanche de la tulipe 13B, la coupelle 17 est supprimée.

Dans cette variante de la Figure 4, la pièce 12 peut être réalisée par forgeage.

La variante de la Figure 5 ne diffère de celle de la Figure 2 que par le fait que la partie tubulaire 16 est prolongée pour former un embout tubulaire 119 venu de matière, qui comporte à son extrémité les cannelures 23. Dans ce cas, une coupelle 28 obture hermétiquement l'extrémité libre de l'embout 119.

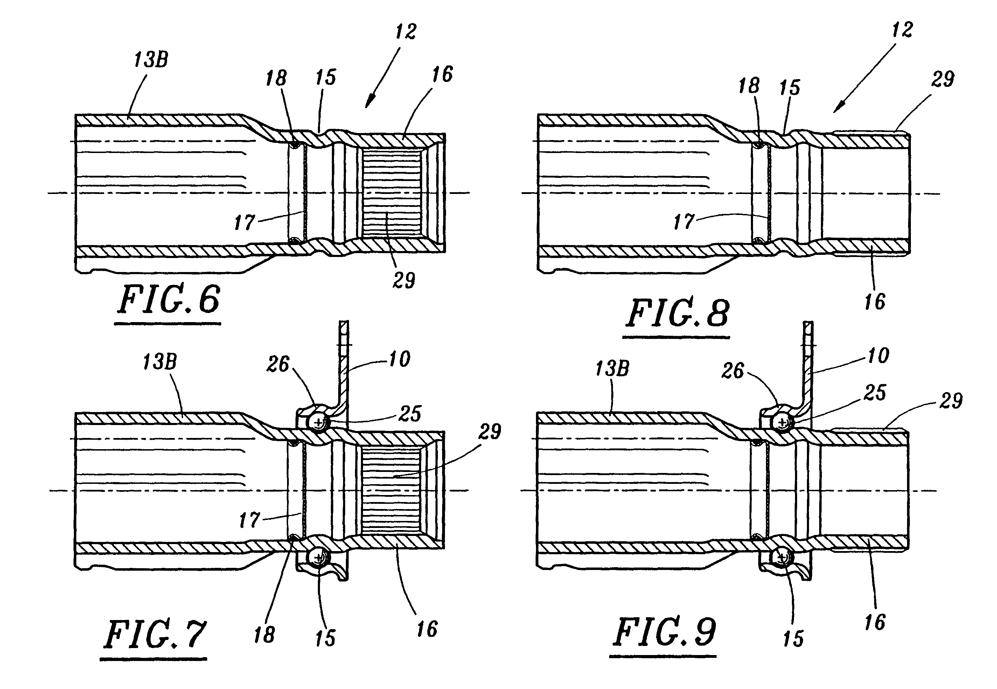

Dans le mode de réalisation des Figures 6 et 7, la pièce 12 de l'arbre-relais est la même que celle de la Figure 2, hormis le fait que la partie tubulaire 16 est de courte longueur. Les cannelures intérieures 29 de cette partie tubulaire reçoivent l'extrémité cannelée (non représentée) d'une pièce complémentaire de l'arbre-relais.

Comme on le voit sur la Figure 7, la bague extérieure 26 du palier 9 peut être venue de matière avec la cloison de support 10, sous forme d'un collet présentant une gorge circulaire intérieure dans laquelle est rectifié un chemin de roulement extérieur pour les billes 25.

La variante des Figures 8 et 9 est identique à celle des Figures 6 et 7, hormis le fait que les cannelures 29 de la partie tubulaire 16 sont extérieures. Dans ce cas, la partie 16 s'emboîte dans l'extrémité intérieurement cannelée de la pièce complémentaire de l'arbre-relais.

Chacun des modes de réalisation de l'arbre-relais décrit ci-dessus intègre la tulipe du joint de transmission 7B. La partie de transmission 4B se termine donc, côté intérieur du véhicule, par le tripode complémentaire. De même, la partie de transmission symétrique 4A se termine, côté intérieur, par un tripode, et la sortie correspondante du différentiel est équipée, avant le montage de cette partie de transmission, d'un ensemble embout cannelé-tulipe recevant ce tripode, par exemple tel que l'ensemble 104 en deux pièces embout cannelé 31-tulipe 32 représenté à la Figure 10. L'embout 31 est similaire à l'embout 19 de la Figure 2 et comporte une partie cannelée 33 qui s'emboîte dans un prolongement cannelé 34 de la tulipe 32.

## Revendications

1. Arbre-relais pour transmission de véhicule automobile, cet arbre étant destiné à relier une sortie du différentiel à un arbre de liaison (6B) d'une roue (3B) et à être supporté par un palier (9) à éléments de roulement dans sa région proche de cet arbre de liaison, l'arbre-relais comprenant, d'une seule pièce (12),
(a) un élément femelle (13B) de joint articulé coulissant (7B),
(b) une piste intérieure de roulement (15) pour le palier (9) réalisée sur l'extérieur de la pièce, et
(c) une partie tubulaire (16) qui s'étend, à partir de cette piste, dans le sens opposé audit élément femelle.

2. Arbre-relais suivant la revendication 1, caractérisé en ce que la piste intérieure de roulement (15) est formée sur une partie radialement déformée de ladite pièce (12).

3. Arbre-relais suivant la revendication 1, caractérisé en ce que la piste intérieure de roulement (15) est réalisée par usinage sur l'extérieur de ladite pièce (12).

4. Arbre-relais suivant la revendication 3, caractérisé en ce que la piste intérieure de roulement (15) est réalisée au droit d'une cloison transversale (27) de ladite pièce (12).

5. Arbre-relais suivant l'une quelconque des revendications 1 à 4, caractérisé en ce que ladite pièce (12) forme, à l'extrémité de ladite partie tubulaire (16), un embout de liaison (119), notamment cannelé, venu de matière.

6. Arbre-relais suivant l'une quelconque des revendications 1 à 4, caractérisé en ce qu'il comporte un embout de liaison séparé (19), notamment cannelé, qui est disposé à l'extrémité de ladite partie tubulaire (16).

7. Arbre-relais suivant l'une quelconque des revendications 1 à 6, caractérisé en ce que l'élément femelle (13B) est une tulipe d'un joint articulé coulissant (7B), notamment à tripode.

8. Dispositif de transmission pour véhicule automobile, comprenant un arbre-relais (8) suivant l'une quelconque des revendications 1 à 7, un organe (10) de support de cet arbre, destiné à être fixé au groupe moto-propulseur ou à la structure du véhicule, une bague extérieure de roulement (26) portée par l'organe de support, et des éléments de roulement (25) interposés entre cette bague extérieure et la piste intérieure de roulement (15) de l'arbre-relais.

9. Dispositif de transmission suivant la revendication 8, caractérisé en ce que la bague extérieure de roulement (26) est montée coulissante dans une ouverture (110) de l'organe de support (10), et en ce que le dispositif comporte des moyens (111) de sollicitation axiale élastique de l'arbre-relais (8) dans le sens opposé audit élément femelle (13B).

10. Dispositif de transmission suivant la revendication 8, caractérisé en ce que la bague extérieure de roulement (26) est venue de matière avec l'organe de support (10).

11. Transmission pour véhicule automobile, comprenant un différentiel dont une sortie est reliée à la roue (3A) la plus proche par une première partie de transmission (4A) et à l'autre roue (3B) par un dispositif de transmission suivant l'une quelconque des revendications 8 à 10, suivi d'une seconde partie de transmission (4B) identique à la première partie de transmission.

12. Transmission suivant la revendication 11, caractérisée en ce que chacune desdites première et seconde parties de transmission (4A, 4B) se termine, côté différentiel, par un élément mâle de joint articulé (7A, 7B).

13. Transmission suivant la revendication 12, caractérisée en ce qu'elle comprend un ensemble élément femelle de joint articulé (31)-embout de liaison (32) interposé entre ladite première partie de transmission (4A) et la sortie correspondante du différentiel.

## Claims

1. Intermediate shaft for motor vehicle transmission, this shaft being intended to connect an output of the differential to a connecting shaft (6B) of a wheel (3B) and to be supported by a bearing (9) having rolling elements in its region close to this connecting shaft, the intermediate shaft comprising, as a single piece (12),
(a)a female element (13B) of a sliding articulated joint (7B),
(b) an internal raceway (15) for the bearing (9) made on the exterior of the piece, and
(c) a tubular part (16) which extends, from this raceway, in the direction opposite to the said female element.

2. Intermediate shaft according to Claim 1, characterized in that the internal raceway (15) is formed on a radially deformed part of the said piece (12).

3. Intermediate shaft according to Claim 1, characterized in that the internal raceway (15) is produced by machining on the exterior of the said piece (12).

4. Intermediate shaft according to Claim 3, characterized in that the internal raceway (15) is produced in line with a transverse partition (27) of the said piece (12).

5. Intermediate shaft according to any one of Claims 1 to 4, characterized in that the said piece (12) forms, at the end of the said tubular part (16), a connecting end piece (119), especially a splined one, formed integrally with it.

6. Intermediate shaft according to any one of Claims 1 to 4, characterized in that it includes a separate connecting end piece (19), especially a splined one, which is arranged at the end of the said tubular part (16).

7. Intermediate shaft according to any one of Claims 1 to 6, characterized in that the female element (13B) is a bell-shaped bowl of a sliding articulated joint (7B), especially a tripot joint.

8. Transmission device for a motor vehicle, comprising an intermediate shaft (8) according to any one of Claims 1 to 7, a member (10) for supporting this shaft, intended to be fixed to the motive power unit or to the structure of the vehicle, an external race (26) borne by the support member, and rolling elements (25) interposed between this external race and the internal raceway (15) of the intermediate shaft.

9. Transmission device according to Claim 8, characterized in that the external race (26) is mounted so that it can slide in an opening (110) of the support member (10), and in that the device includes means (111) elastically axially urging the intermediate shaft (8) in the direction opposite to the said female element (13B).

10. Transmission device according to Claim 8, characterized in that the external race (26) is formed integrally with the support member (10).

11. Transmission for a motor vehicle comprising a differential one output of which is connected to the closest wheel (3A) by a first transmission part (4A) and to the other wheel (3B) by a transmission device according to any one of Claims 8 to 10 followed by a second transmission part (4B) identical to the first transmission part.

12. Transmission according to Claim 11, characterized in that each of the said first and second transmission parts (4A, 4B) ends, on the differential side, in the male element of an articulated joint (7A, 7B).

13. Transmission according to Claim 12, characterized in that it comprises an assembly formed of a female articulated joint element (31) and of a connecting end piece (32) which assembly is interposed between said first transmission part (4A) and the corresponding output of the differential.

## Patentansprüche

1. Verbindungswelle für Antriebe von Kraftfahrzeugen, die bestimmt ist zur Verbindung eines Ausgangs eines Differentialgetriebes mit einer Verbindungswelle (6B) eines Rades (3B) und abgestützt ist durch ein Kugellager im Bereich nahe der Verbindungswelle, welche Verbindungswelle als zusammenhängendes Teil (12) umfaßt
a) ein Aufnahmeteil (13B) eines Schwenk- und Schiebegelenks (7B),
b) eine innere Rollenbahn (15) für das Lager (9) auf der Außenseite des Teils,
c) einen rohrförmigen Abschnitt, der sich, von dieser Rollenbahn aus, in entgegensetzte Richtung zu dem Aufnahmeteil erstreckt.

2. Verbindungswelle nach Anspruch 1, dadurch **gekennzeichnet,** daß die innere Rollenbahn (15) gebildet ist auf einem radial verformten Bereich des Teils (12).

3. Verbindungswelle nach Anspruch 1, dadurch **gekennzeichnet,** daß die innere Rollenbahn (15) durch Bearbeitung auf der Außenseite des Teils (12) hergestellt ist.

4. Verbindungswelle nach Anspruch 3. dadurch **gekennzeichnet,** daß die innere Rollenbahn (15) in Höhe einer quergerichteten Trennwand (27) des Teils (12) hergestellt ist.

5. Verbindungswelle nach einem der Ansprüche 1 bis 4, dadurch **gekennzeichnet,** daß das Teil (12) am Ende des rohrförmigen Abschnitts ein Verbindungsstück (119) mit Keilnuten aus dem gleichen Material umfaßt.

6. Verbindungswelle nach einem der Ansprüche 1 bis 4, dadurch **gekennzeichnet,** daß sie ein getrenntes Verbindungsstück (19) umfaßt, das insbesondere mit Keilnuten versehen ist und das am Ende des rohrförmigen Abschnitts (16) angeordnet ist.

7. Verbindungswelle nach einem der Ansprüche 1 bis 6, dadurch **gekennzeichnet,** daß das Aufnahmeteil (13B) eine Glocke eines Schwenk- und Schiebegelenks (7B) ist, insbesondere eines Tripoden-Gelenks ist.

8. Antriebseinrichtung für ein Kraftfahrzeug, mit einer Verbindungswelle (8) gemäß einem der Ansprüche 1 bis 7, einem Stützorgan (10) für die Welle, das an der Motorgruppe befestigt ist oder an dem Fahrzeugaufbau, einem Rollen-Außenring (26), der getragen wird durch die Stützeinrichtung, und Rollenelemente (25) zwischen dem Außenring und der inneren Rollenbahn (15) der Verbindungswelle.

9. Antriebseinrichtung nach Anspruch 8, dadurch **gekennzeichnet,** daß der Rollen-Außenring (26) verschiebbar in einer Öffnung (110) des Stützorgans (10) angeordnet ist und daß die Einrichtung Mittel (111) zur axialen. elastischen Verbindung der Verbindungswelle (8) im Sinne entgegen dern Aufnahmeteil (13B) umfaßt.

10. Antriebseinrichtung nach Anspruch 8. dadurch **gekennzeichnet,** daß der Rollen-Außenring (26) einstückig mit dem Stützorgan (10) ausgebildet ist.

11. Antrieb für Kraftfahrzeuge mit einem Differentialgetriebe, dessen Ausgang mit dem näheren Rad (3A) durch einen ersten Übertragungsbereich (4A) und dessen anderes Rad (3B) mit einer Antriebseinrichtung gemäß einem der Ansprüche 8 bis 10 verbunden ist, der ein zweiter Übertragungsbereich (4B) folgt, der mit dem ersten Antriebsbereich identisch ist.

12. Antrieb gemäß Anspruch 11, dadurch **gekennzeichnet,** daß der erste und zweite Übertragungsbereich (4A, 4B) auf der Seite des Differentialgetriebes durch ein Innenteil eines Gelenks (7A, 7B) endet.

13. Antrieb gemäß Anspruch 12, dadurch **gekennzeichnet,** daß der Antrieb eine Anordnung aus einem Aufnahmeteil des Gelenks (31) und einem Verbindungsstück (32) umfaßt, die zwischen dem ersten Übertragungsbereich (4A) und dem entsprechenden Ausgang des Differentialgetriebes angeordnet ist.
